# EUROPEAN PATENT APPLICATION

(11) **EP 4 733 935 A1**
(43) Date of publication of application: **29.04.2026**
(21) Application number: 24855792.8
(22) Date of filing: 20.08.2024
(51) Int. Cl.: G06F 9/455

(54) **SERVICE OPTIMIZATION METHOD AND APPARATUS, STORAGE MEDIUM, AND COMPUTER PROGRAM PRODUCT**

(30) Priority: 24.08.2023 CN 202311078621
(71) Applicant: Huawei Technologies Co., Ltd., Shenzhen, Guangdong 518129 (CN)
(72) Inventor: FU, Sheng, Shenzhen, Guangdong 518129 (CN); ZHANG, Ziyang, Shenzhen, Guangdong 518129 (CN); ZENG, Dexun, Shenzhen, Guangdong 518129 (CN); HUA, Xingcheng, Shenzhen, Guangdong 518129 (CN); LIANG, Xiaohao, Shenzhen, Guangdong 518129 (CN); GAI, Yuhang, Shenzhen, Guangdong 518129 (CN); WANG, Yaoyuan, Shenzhen, Guangdong 518129 (CN); LIAO, Jianxing, Shenzhen, Guangdong 518129 (CN)
(74) Representative: MERH-IP Matias Erny Reichl Hoffmann Patentanwälte PartG mbB
(86) International application number: PCT/CN2024/113258
(87) International publication number: WO 2025/040069

(57) **Abstract**

This application discloses a service optimization method and apparatus, a storage medium, and a computer program product, and pertains to the field of virtualization technologies. The method includes: obtaining performance data of a physical machine, where the performance data includes performance data of at least one dimension of any virtual environment running on the physical machine; identifying, based on the obtained performance data and a type of the virtual environment by using an identification model, a type of a service running in the virtual environment; and further, optimizing the corresponding service based on the identified service type. In the solutions, service identification accuracy is improved by using the identification model, so that a corresponding service can be optimized more properly and effectively, thereby improving service performance.

## Description

This application claims priority to Chinese Patent Application No. 202311078621.7, filed on August 24, 2023 and entitled "SERVICE OPTIMIZATION METHOD AND APPARATUS, STORAGE MEDIUM, AND COMPUTER PROGRAM PRODUCT", which is incorporated herein by reference in its entirety.

### TECHNICAL FIELD

This application relates to the field of virtualization technologies, and in particular, to a service optimization method and apparatus, a storage medium, and a computer program product.

### BACKGROUND

In recent years, with continuous development of computer hardware resources such as a multi-core processor, a network, a memory, and a storage, an upper limit of a quantity of virtual environments that can run on one physical machine is continuously increasing, and a user can run a service in the virtual environment. How to improve performance of the service running in the virtual environment while meeting a performance requirement of each virtual environment is a problem that needs to be focused on in the field of virtualization technologies.

### SUMMARY

This application provides a service optimization method and apparatus, a storage medium, and a computer program product, to improve service identification accuracy, so that a corresponding service is optimized more properly and effectively, thereby improving service performance. The technical solutions are as follows:

According to a first aspect, a service optimization method is provided. The method includes:
obtaining first performance data of a physical machine, where at least one virtual environment runs on the physical machine, the first performance data includes performance data of at least one dimension of a first virtual environment, and the first virtual environment is any one of the at least one virtual environment; determining a first service type based on the first performance data and a specification of the first virtual environment by using an identification model, where the first service type is a type of a service running in the first virtual environment, the identification model represents a correspondence between performance of the physical machine and a plurality of service types in a plurality of virtual environment specifications, the plurality of service types include the first service type, and the plurality of virtual environment specifications include the specification of the first virtual environment; and optimizing, based on the first service type, the service running in the first virtual environment.

In this solution, service identification accuracy is improved by using the identification model, so that a corresponding service can be optimized more properly and effectively, thereby improving service performance.

To implement non-contact load sensing and protect user privacy of the virtual environment, a server does not intrude the inside of the virtual environment to obtain performance data of the virtual environment, but obtains one or more of processor performance monitor data, operating system data, and virtual environment performance monitor data of the physical machine. In other words, the first performance data includes one or more of the processor performance monitor data, the operating system data, and the virtual environment performance monitor data.

Optionally, the obtaining the first performance data of the physical machine includes: collecting multi-dimensional performance data of the physical machine; and performing dimension reduction processing on the multi-dimensional performance data, to obtain the first performance data. In other words, invalid data and redundant data in the performance data are reduced through dimension reduction processing, to improve subsequent identification accuracy of the service type while reducing a data amount.

Optionally, the at least one virtual environment includes one or more of a virtual machine, a container, and a function. In other words, this application is widely applied to a wide range of scenarios.

Optionally, the identification model includes a plurality of submodels that are in one-to-one correspondence with the plurality of virtual environment specifications, and each of the plurality of submodels is used to identify a type of a service running in a virtual environment of a corresponding specification. In this way, it is convenient to select a corresponding submodel based on a specification of the virtual environment to identify the service type.

Optionally, the method further includes: determining the identification model based on the specification of the first virtual environment and a model library. In other words, in this solution, the model library is configured, to facilitate service type identification.

The determining the identification model based on the specification of the first virtual environment and the model library includes: if the model library includes a first submodel corresponding to the specification of the first virtual environment, determining the model library as the identification model.

Optionally, the determining the identification model based on the specification of the first virtual environment and the model library includes: if the model library does not include the first submodel corresponding to the specification of the first virtual environment, generating the first submodel based on the specification of the first virtual environment and the model library; and adding the first submodel to the model library, to obtain the identification model. In other words, this solution supports generating, by using the model library, a submodel corresponding to a newly added specification.

Optionally, the generating the first submodel based on the specification of the first virtual environment and the model library includes: performing interpolation processing on first sample data in the model library based on the specification of the first virtual environment, to obtain second sample data, where the first sample data is used to obtain an existing submodel in the model library through training; and training an initial model by using the second sample data, to obtain the first submodel. It should be understood that, in this solution, the second sample data is generated based on the first sample data, and after the model library is deployed on the physical machine on which the virtual environment of a user is located, the second sample data does not need to be obtained through resampling by intruding the inside of the virtual environment of the user, to avoid infringement of user privacy. In addition, representativeness of the generated second sample data can be improved in an interpolation manner.

Optionally, the determining the first service type based on the first performance data and the specification of the first virtual environment by using the identification model includes: inputting the first performance data into the first submodel that is in the plurality of submodels included in the identification model and that corresponds to the specification of the first virtual environment, to obtain a plurality of probabilities output by the first submodel, where the plurality of probabilities are in one-to-one correspondence with the plurality of service types; and determining the first service type from the plurality of service types based on the plurality of probabilities.

Optionally, the determining the first service type from the plurality of service types based on the plurality of probabilities includes: if a difference between a largest value and a second largest value in the plurality of probabilities is less than a probability difference threshold, determining a candidate probability set from the plurality of probabilities based on the probability difference threshold, where the candidate probability set includes first N probabilities that are sorted in descending order of values in the plurality of probabilities, a difference between every two adjacent probabilities in the N probabilities is less than the probability abnormality threshold, and N is an integer greater than 1; and determining, based on key performance data in the first performance parameter, the first service type from N service types corresponding to the N probabilities. In other words, when the difference between every two adjacent probabilities in the first N probabilities is small, a server further needs to perform final determination based on the key performance data, to provide identification accuracy.

Optionally, the optimization includes software optimization and/or hardware optimization.

When the optimization includes the hardware optimization, the optimizing, based on the first service type, the service running in the first virtual environment includes: generating, based on the specification of the first virtual environment, the first service type, and a first mapping relationship, an adjustment policy for a mapping relationship between a hardware resource of the physical machine and a virtual resource of the first virtual environment, where the first mapping relationship represents a performance parameter of the physical machine in each of a plurality of combinations, the plurality of combinations are a plurality of combinations of the plurality of service types and a plurality of resource mapping relationships, the resource mapping relationship is a mapping relationship between the hardware resource of the physical machine and a virtual resource of a virtual environment that can run on the physical machine. The first mapping relationship may be considered as a mapping relationship of a service and a resource from same parameter space to performance parameter space. In this solution, a hardware optimization policy of a corresponding service is generated by using the established mapping relationship of the service and the resource from the same parameter space to the performance parameter space, to implement hardware optimization of the corresponding service and improve service performance.

When the service optimization includes the software optimization, that a server performs, based on the first service type, software optimization on the service running in the first virtual environment includes: The server determines, from service accelerators respectively corresponding to the plurality of service types, a first service accelerator corresponding to the first service type, and generates a start policy of the first service accelerator. In other words, in this solution, software acceleration can be performed on a corresponding service, to improve service performance.

According to a second aspect, a service optimization apparatus is provided. The service optimization apparatus has a function of implementing behavior of the service optimization method in the first aspect. The service optimization apparatus includes one or more modules, and the one or more modules are configured to implement the service optimization method provided in the first aspect.

According to a third aspect, a server is provided. The server includes a processor and a storage. The storage is configured to store a program for performing the service optimization method provided in the first aspect, and store data for implementing the service optimization method provided in the first aspect. The processor is configured to execute the program stored in the storage. The server may further include a communication bus, and the communication bus is configured to establish a connection between the processor and the storage.

According to a fourth aspect, a computer-readable storage medium is provided. The computer-readable storage medium stores instructions, and when the instructions are run on a computer, the computer is caused to perform the service optimization method in the first aspect.

According to a fifth aspect, a computer program product including instructions is provided. When the computer program product runs on a computer, the computer is caused to perform the service optimization method in the first aspect.

Technical effects achieved in the second aspect, the third aspect, the fourth aspect, and the fifth aspect are similar to the technical effects achieved by the corresponding technical means in the first aspect. Details are not described herein again.

### BRIEF DESCRIPTION OF DRAWINGS

FIG. 1 is a diagram of a structure of a computer device according to an embodiment of this application;
FIG. 2 is a flowchart of a service optimization method according to an embodiment of this application;
FIG. 3 is a flowchart of a data preprocessing method according to an embodiment of this application;
FIG. 4 is a flowchart of a submodel generation method according to an embodiment of this application;
FIG. 5 is a flowchart of a service type identification method according to an embodiment of this application;
FIG. 6 is a diagram of a service optimization process according to an embodiment of this application; and
FIG. 7 is a diagram of a structure of a service optimization apparatus according to an embodiment of this application.

### DESCRIPTION OF EMBODIMENTS

To make objectives, technical solutions, and advantages of embodiments of this application clearer, the following further describes implementations of this application in detail with reference to the accompanying drawings.

A related background and an application scenario of embodiments of this application are first described.

In recent years, with continuous development of computer hardware resources such as a multi-core processor, a network, a memory, and a storage, an upper limit of a quantity of virtual environments that can run on one physical machine is continuously increasing, and resource virtualization has become an efficient resource utilization manner. The resource virtualization has an increasingly prominent management requirement. To be specific, limited computer hardware resources are managed in a unified manner and allocated on demand, to improve flexibility and timeliness of resource allocation, improve resource utilization, and improve performance of a service running in the virtual environment.

A virtual machine is used as an example. In a conventional technology, load carried by a plurality of virtual machines running on one physical machine has diversified features. For example, one of the virtual machines carries central processing unit (central processing unit, CPU)-intensive load, another virtual machine carries storage-intensive load, and different types of load usually need to occupy different computer hardware resources. Therefore, in the conventional technology, an intrusive load sensing method is used to identify a type of load carried by the virtual machine, that is, the inside of the virtual machine is intruded to obtain a performance parameter of the virtual machine, for example, obtain parameters such as a CPU, a disk, and a network input/output (in/out, I/O) of the virtual machine. The type of the load carried by the virtual machine is determined based on the performance parameter of the virtual machine, and the hardware resources of the physical machine are allocated based on the determined load type.

However, in the foregoing method, the inside of the virtual machine needs to be intruded to obtain the performance parameter of the virtual machine, and this poses a threat to privacy security of a user who uses the virtual machine. How to improve overall reliability, security, and efficiency of a virtual machine system while meeting a performance requirement of each virtual machine is a problem that needs to be focused on when the resources of the physical machine are virtualized and allocated.

To resolve the foregoing problem, embodiments of this application provide a service optimization method. The method may be applied to various virtualization scenarios, for example, applied to virtualization scenarios in fields such as cloud computing, software testing, and security, to improve service performance in a corresponding virtualization scenario.

In the field of cloud computing, a virtualization technology may be used for a cloud host, a cloud storage, a cloud platform, and the like. For example, a plurality of virtual machines run on the cloud host. This solution is applied to servers corresponding to the cloud host, the cloud storage, and the cloud platform, so that resources needed by a virtual machine can be properly scheduled, to optimize a service running on the virtual machine.

In the field of software testing, to ensure secure and stable running of a computer, software testing is usually run in a virtual machine, and a real physical computer may provide a plurality of virtual machines for different software to independently run testing. In a large-scale software testing process in a large-scale cluster, an elastic virtualization architecture of the present invention may be used to sense test software types and required hardware resources of different virtual machines, and resource scheduling is performed based on the test software types and the required hardware resources, to implement efficient and secure management of the software testing.

In the security field, malicious software needs to be checked and isolated in a timely manner for network security work. To securely detect whether software is malicious software, a plurality of virtual machines may be set for testing. An elastic virtualization architecture of the present invention is used, so that a software type can be sensed in a non-contact manner, and a part of malicious software that highly depends on hardware resources is pre-classified, to improve screening efficiency of the network security work.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

The following explains some terms in embodiments of this application.

Non-contact load sensing (non-contact load sensing): A load type is identified by collecting parameters that are indirectly related to load without contacting the load.

Elastic virtualization architecture (elastic virtualization architecture): All hardware resources of a computer, such as a server, a network, a memory, and a storage, are presented through abstraction and virtualization to break insurmountable barriers between physical structures and implement an elastic resource management architecture.

A virtualization technology is a technology that abstracts a physical resource of a computer and converts the resource into a virtual computer resource for a program to use.

A virtual environment is a virtual environment generated by using a virtualization technology, for example, a virtual machine, a container (docker or container), or a function (function).

The virtual machine is a virtualized machine that is simulated by directly using an operating system (operating system, OS) of a local host based on a real-time dynamic program behavior modification and simulation algorithm and that has an OS compatible with the local host. In other words, the virtual machine is generated based on a software virtualization technology. In the virtualization technology, a plurality of independent operating systems and applications may run on one physical machine, and the operating systems and the applications are isolated from each other and do not affect each other.

The container can be implemented using a sandbox mechanism. A different between the container and the virtual machine lies in that the container does not need to run a complete operating system and only need to provide a lightweight runtime environment, and there is no interface between containers.

The function may also be referred to as function computing, and the function may also be implemented by using the virtualization technology. The function is a serverless computing service that can automatically manage underlying infrastructures, including a computing resource, a storage resource, a network resource, and another resource. A user only needs to write and deploy code.

The following describes a computer device provided in embodiments of this application. The computer device may be a server, or a management device/control device of the server. The computer device may alternatively be a terminal device. The computer device is configured to perform the service optimization method provided in embodiments of this application.

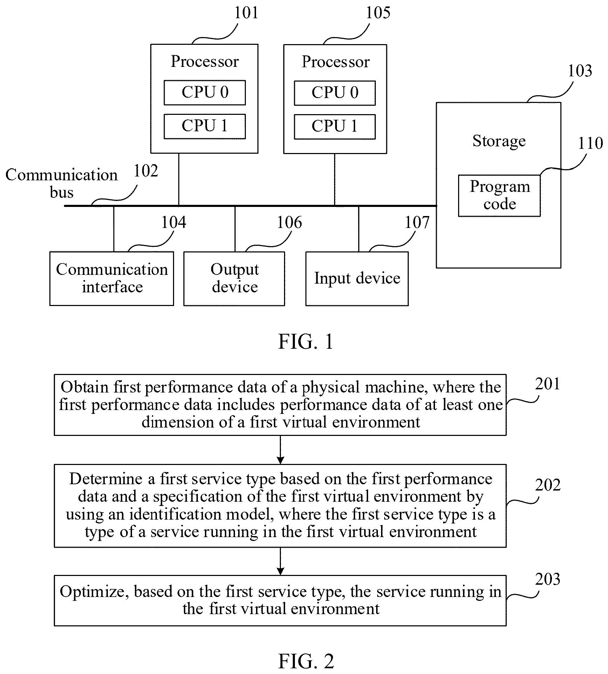

FIG. 1 is a diagram of a structure of a computer device according to an embodiment of this application. The computer device includes one or more processors 101, a communication bus 102, a storage 103, and one or more communication interfaces 104.

The processor 101 is a general-purpose central processing unit (CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. Optionally, the PLD is a complex programmable logic device (complex programmable logic device, CPLD), a field programmable gate array (field programmable gate array, FPGA), generic array logic (generic array logic, GAL), or any combination thereof.

The communication bus 102 is configured to transmit information between the foregoing components. Optionally, the communication bus 102 may be classified into an address bus, a data bus, a control bus, or the like. For ease of representation, only one thick line is used to represent the bus in the figure, but this does not mean that there is only one bus or only one type of bus.

Optionally, the storage 103 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, and the like), a magnetic disk storage medium, another magnetic storage device, or any other medium that can be used to carry or store expected program code in a form of instructions or a data structure and that can be accessed by a computer, but is not limited thereto. The storage 103 exists independently, and is connected to the processor 101 through the communication bus 102, or the storage 103 is integrated with the processor 101.

The communication interface 104 is configured to communicate with another device or a communication network by using any apparatus such as a transceiver. The communication interface 104 includes a wired communication interface, and optionally further includes a wireless communication interface. The wired communication interface is, for example, an Ethernet interface. Optionally, the Ethernet interface is an optical interface, an electrical interface, or a combination thereof. The wireless communication interface is a wireless local area network (wireless local area network, WLAN) interface, a cellular network communication interface, a combination thereof, or the like.

Optionally, in some embodiments, the computer device includes a plurality of processors, for example, a processor 101 and a processor 105 shown in FIG. 1. Each of these processors is a single-core processor or a multi-core processor. Optionally, the processor herein is one or more devices, circuits, and/or processing cores for processing data (for example, computer program instructions).

During specific implementation, in an embodiment, the computer device further includes an output device 106 and an input device 107. The output device 106 communicates with the processor 101, and can display information in a plurality of manners. For example, the output device 106 is a liquid crystal display (liquid crystal display, LCD), a light emitting diode (light emitting diode, LED) display device, a cathode ray tube (cathode ray tube, CRT) display device, a projector (projector), or the like. The input device 107 communicates with the processor 101, and can receive an input of a user in a plurality of manners. For example, the input device 107 is a mouse, a keyboard, a touchscreen device, or a sensor device.

In some embodiments, the storage 103 is configured to store program code 110 for executing the solutions of this application, and the processor 101 can execute the program code 110 stored in the storage 103. The program code includes one or more software modules, and the computer device can implement, by using the processor 101 and the program code 110 in the storage 103, a service optimization method provided in the following embodiment in FIG. 2.

The following describes the service optimization method provided in the embodiment of this application. The method may be performed by a physical machine, or may be performed by a management device or a control device of the physical machine. The physical machine may be a server, or may be a terminal device, for example, a personal computer.

FIG. 2 is a flowchart of a service optimization method according to an embodiment of this application. An example in which the method is applied to a server is used. Refer to FIG. 2. The method includes the following steps.

**Step 201:** Obtain first performance data of a physical machine, where the first performance data includes performance data of at least one dimension of a first virtual environment.

The physical machine is the server, at least one virtual environment runs on the physical machine, and the first virtual environment is any one of the at least one virtual environment. The physical machine may also be referred to as a physical device, a real machine, a host, or the like.

To implement non-contact load sensing and protect user privacy of the virtual environment, the server does not intrude the inside of the virtual environment to obtain performance data of the virtual environment, but obtains one or more of processor performance monitor data, operating system data, and virtual environment performance monitor data of the physical machine. In other words, the first performance data includes one or more of the processor performance monitor data, the operating system data, and the virtual environment performance monitor data. Certainly, in some cases, for example, under authorization by a user of the virtual environment, the server may alternatively intrude the inside of the virtual environment to directly obtain the performance data of the virtual environment.

The processor performance monitor data includes performance monitor data obtained by a CPU performance monitor unit (performance monitor unit, PMU), and the virtual environment performance monitor data includes performance monitor data obtained by a virtual environment monitor. The virtual environment monitor may include a hypervisor. The hypervisor is a virtual machine monitor. The processor performance monitor data may be considered as a system architecture feature of the physical machine, and the virtual environment performance monitor data may be considered as a virtualization feature of the virtual environment.

Because there are many types of performance data of the physical machine, and in a process of collecting the performance data of the physical machine, some invalid data or redundant data may be collected, the collected performance data of the physical machine needs to be preprocessed, to obtain the first performance data of the physical machine.

In an implementation, the server collects multi-dimensional performance data of the physical machine, and performs dimension reduction processing on the multi-dimensional performance data, to obtain the first performance data, where the first performance data includes the performance data of at least one dimension of the first virtual environment. The multi-dimensional performance data includes the processor performance monitor data, the operating system data, and performance monitor data of the first virtual environment of the physical machine.

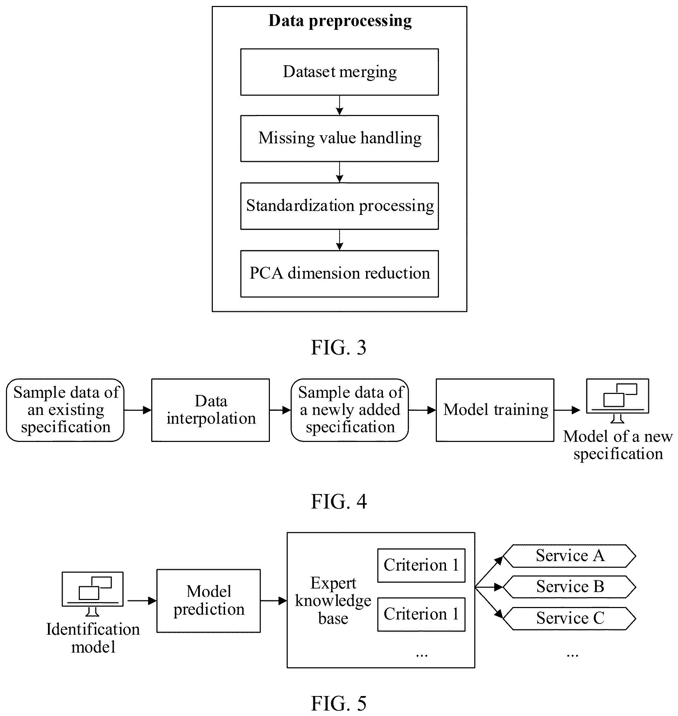

In other words, data preprocessing includes the dimension reduction processing. A manner of the dimension reduction processing includes principal component analysis (principal component analysis, PCA) or another manner. Optionally, refer to FIG. 3. The data preprocessing further includes one or more operations of dataset merging, missing value handling, standardization processing, and the like. An execution sequence of operations such as the dataset merging, the missing value handling, the standardization processing, and PCA dimension reduction is not limited in this embodiment of this application. For example, standardization processing may be performed first, and then missing value handling is performed. For example, missing value handling may be performed first, and then dataset merging is performed.

The dataset merging refers to merging a plurality of data files into one dataset. The dataset obtained through merging may be a data file in a table form, and each column in the data file represents one-dimensional data. The plurality of data files may include a data file obtained by the PMU, an OS data file, and a data file obtained by the virtual environment monitor. In this embodiment of this application, the plurality of data files include the foregoing multi-dimensional performance data.

The missing value handling includes collecting statistics on a missing rate of data in each dimension, for example, a missing rate of data in each column, deleting data in a corresponding dimension whose missing rate exceeds a threshold, and filling in data in a corresponding dimension whose data is missed but a missing rate does not exceed the threshold. The threshold may be a value such as 60% or 70%. There are a plurality of data filling methods, for example, a default value filling manner, an average value filling manner, and an interpolation manner. Thresholds of missing rates corresponding to data in different dimensions may be different or may be the same, and data filling manners in different dimensions may be different or may be the same.

The standardization processing may include one or more of normalization processing, quantization processing, and the like. Standardization processing performed on data can eliminate impact of dimensions between data in different dimensions, ensure balance of the data, and improve determination of a service type.

It should be understood that the foregoing several manners included in the preprocessing may be separately used or combined based on an actual requirement. For example, dataset merging, missing value handling, and standardization processing are performed, but PCA is not performed.

The virtual environment in this embodiment of this application may be various types of virtual environments. For example, the virtual environment may be a virtual machine, a container, or a function. One or more types of virtual environments may run on the server. For example, only a plurality of virtual machines may run on the server. For another example, both the virtual machine and the container run on the server. The virtual machine may be referred to as a VM for short.

It should be understood that in step 201, an example in which the performance data of the first virtual environment is obtained is used for description. Usually, a plurality of virtual environments run on the physical machine, and the server may obtain performance data of at least one dimension of each of the plurality of virtual environments according to the method described above.

**Step 202:** Determine a first service type based on the first performance data and a specification of the first virtual environment by using an identification model, where the first service type is a type of a service running in the first virtual environment.

After obtaining the first performance data, the server determines, based on the first performance data and the specification of the first virtual environment by using the identification model, the type of the service running in the first virtual environment, that is, determines the first service type. The identification model represents a correspondence between performance of the physical machine and a plurality of service types in a plurality of virtual environment specifications, the plurality of virtual environment specifications include the specification of the first virtual environment, and the plurality of service types include the first service type. Specifically, the identification model represents a correspondence between performance of the physical machine and each of the plurality of service types in a specification of each virtual environment in the plurality of virtual environment specifications.

There are a plurality of manners in which the server obtains the specification of the first virtual environment. For example, the server may obtain the specification of the first virtual environment from a generation file of the virtual environment, or the server may obtain the specification of the first virtual environment from the performance monitor data obtained by the virtual environment monitor.

For example, the virtual environment is the virtual machine. The specification of the first virtual environment may also be referred to as a first virtual machine specification, and the first virtual machine specification may be quad-core with 8G, hexa-core with 12G, or octa-core with 16G. For the container, in an implementation, a container specification may be reflected by using usage of a CPU and a memory resource of the physical machine. For example, the container specification may include a CPU request amount and a CPU limit of the container for the physical machine. The CPU request amount is a minimum CPU requirement of the container, and is used as a resource allocation determining dependency during container scheduling. The CPU limit is a maximum CPU value that can be used by the container. For the function, in an implementation, a function specification may be reflected by using an account resource limit. The account resource limit includes, for example, a maximum quantity of functions that are allowed to be created by a single account and a maximum quantity of versions that are allowed to be created for a single function.

The identification model is a machine learning model or a deep learning model. A training manner, a model structure, and the like of the identification model are not limited in this embodiment of this application.

In an implementation, the identification model includes a plurality of submodels that are in one-to-one correspondence with the plurality of virtual environment specifications, and each of the plurality of submodels is used to identify a type of a service running in a virtual environment of a corresponding specification. For example, the identification model includes a first submodel corresponding to the specification of the first virtual environment, and the first submodel can be used to identify the type of the service running in the first virtual environment, that is, the first submodel represents a correspondence between the performance of the physical machine and the plurality of service types in the specification of the first virtual environment.

To improve service type identification efficiency, a model library is preset in the physical machine, and the model library includes at least one submodel corresponding to a specification of the at least one virtual environment. Before the first service type is determined by using the identification model, the identification model is first determined based on the specification of the first virtual environment and the model library.

If the model library includes the first submodel corresponding to the specification of the first virtual environment, the server determines the model library as the identification model. In other words, the server does not need to perform re-training to generate the first submodel. In other words, the model library is preset to improve service type identification efficiency.

If the model library does not include the first submodel corresponding to the specification of the first virtual environment, the server generates the first submodel based on the specification of the first virtual environment and the model library, and adds the first submodel to the model library, to obtain the identification model. In other words, this solution further supports generating, based on the preset model library, a submodel corresponding to a virtual environment of a new specification, and continuously updating the model library, to facilitate subsequent use and deployment.

An implementation in which the server generates the first submodel based on the specification of the first virtual environment and the model library is: performing interpolation processing on first sample data in the model library based on the specification of the first virtual environment, to obtain second sample data, where the first sample data is used to obtain an existing submodel in the model library through training; and training an initial model by using the second sample data, to obtain the first submodel.

In other words, refer to FIG. 4. The model library provides sample data (that is, the first sample data) of a virtual environment of an existing specification, and sample data (that is, the second sample data) of a virtual environment of a newly added specification may be generated through interpolation processing, so that a submodel (that is, the first submodel) corresponding to the virtual environment of the new specification is obtained through training by using the sample data of the virtual environment of the new specification.

The first sample data may include performance data of the virtual environment obtained by the physical machine by intruding into the virtual environment, and/or performance data of the virtual environment obtained by the physical machine in a non-contact load sensing manner. The first sample data does not include performance data of a virtual environment whose specification is the same as that of the first virtual environment. In other words, when the first submodel needs to be generated through re-training, the existing specification in the model library does not include the specification of the first virtual environment.

The initial model may be an untrained model. The untrained model is trained by using the second sample data, that is, a parameter of the initial model is optimized through training, to obtain the first submodel. Each submodel in the model library may be obtained by training an initial model. Alternatively, the initial model is a pre-trained model. Sample data used for pre-training and a pre-training method are not limited in this embodiment of this application. The pre-trained model has a specific capability, but identification accuracy of the service type is still low, or the pre-trained model cannot be directly used to identify the service type. The pre-trained model is retrained by using the second sample data, to further optimize a parameter of the model. In this way, the obtained first submodel can be used to identify the service type, and the identification accuracy is high.

The interpolation processing may be Kriging interpolation or another interpolation manner.

It should be understood that, in this solution, the second sample data is generated based on the first sample data, and after the model library is deployed on the physical machine on which the virtual environment of a user is located, the second sample data does not need to be obtained through resampling by intruding into the virtual environment of the user, to avoid infringement of user privacy. In addition, representativeness of the generated second sample data can be improved in an interpolation manner. A manner of generating the second sample data based on the first sample data and obtaining the first submodel through training may be understood as a manner of generating a sample and a model of a newly added specification when a sample and a model of a specification exist. In a test experiment, identification precision, a recall rate, and an f1 score (f1-score) of the submodel generated in this manner are all better than 96%.

After the server determines the identification model, an implementation in which the server determines the first service type based on the first performance data and the specification of the first virtual environment by using the identification model is: inputting the first performance data into the first submodel corresponding to the specification of the first virtual environment, to obtain a plurality of probabilities output by the first submodel, where the plurality of probabilities are in one-to-one correspondence with the plurality of service types; and determining the first service type from the plurality of service types based on the plurality of probabilities.

Alternatively, the server extracts a feature of the first performance data, to obtain first feature data, and inputs the first feature data into the first submodel corresponding to the specification of the first virtual environment, to obtain the plurality of probabilities output by the first submodel. There are many feature extraction manners. This is not limited in this embodiment of this application. Feature data obtained through feature extraction may also be referred to as dimension-reduced feature data.

Optionally, the server determines a largest value in the plurality of probabilities, and determines a service type corresponding to the largest value as the first service type.

Alternatively, because a difference between the plurality of probabilities may be small, in this case, determining the first service type based only on the largest value in the plurality of probabilities may be inaccurate. Therefore, to improve the identification accuracy of the service type, if a difference between the largest value and a second largest value in the plurality of probabilities is less than a probability difference threshold, the server determines a candidate probability set from the plurality of probabilities based on the probability difference threshold. The candidate probability set includes first N probabilities that are sorted in descending order of values in the plurality of probabilities, a difference between every two adjacent probabilities in the N probabilities is less than the probability abnormality threshold, and N is an integer greater than 1. The server determines, based on key performance data in the first performance parameter, the first service type from N service types corresponding to the N probabilities. In other words, when the difference between every two adjacent probabilities in the first N probabilities is small, the server further needs to perform final determination based on the key performance data.

For example, the plurality of probabilities are sorted in descending order of values and are sequentially 0.81, 0.79, 0.78, 0.45, 0.44, and 0.02, and the probability difference threshold is 0.05. In this case, the candidate probability set determined according to the foregoing method is {0.81, 0.79, 0.78}, that is, the candidate probability set includes first three probabilities. The server determines, based on key performance data in the first performance data, one service type from three service types corresponding to the three probabilities as the first service type.

If the difference between the largest value and the second largest value in the plurality of probabilities is less than the probability difference threshold, the server determines the service type corresponding to the largest value as the first service type.

For example, the plurality of probabilities are sorted in descending order of values and are sequentially 0.81, 0.45, 0.43, 0.42, 0.32, and 0.02, and the probability difference threshold is 0.05. Because a difference between 0.81 and 0.45 is greater than 0.05, it indicates that the identification model can accurately identify the service type. In this case, the server may directly determine a service type corresponding to 0.81 as the first service type.

An implementation in which the server determines, based on the key performance data in the first performance parameter, the first service type from the N service types corresponding to the N probabilities is: The server determines, based on the key performance data in the first performance parameter, the first service type from the N service types by using determining logic in an expert knowledge base.

The determining logic in the expert knowledge base is determined based on an empirical value or an expected value of a key performance parameter. In other words, when services of the N service types are respectively run, the server determines the first service type from the N service types based on the key performance data in the first performance data and expected values of the key performance parameter.

A service identification process in this embodiment of this application is briefly described with reference to FIG. 5. Refer to FIG. 5. After model prediction is performed by using the identification model, it is finally determined, based on the determining logic (including a criterion 1, a criterion 2, and the like) in the expert knowledge base, that the service type is a service A, a service B, a service C, or the like.

In this embodiment of this application, to improve optimization performance of a service, a granularity of an identified service type is more refined than that in the conventional technology. Specifically, in the conventional technology, a load type may be identified by using a Markov model. The load type may include CPU-intensive, graphics processing unit (graphics processing unit, GPU)-intensive, memory-intensive, I/O-intensive, and the like. However, in this solution, an identified service type is related to a specific service, and may include a Spark type, an Hbase type, and a Hive type in a big data scenario, an MySQL type in a database scenario, and an Nginx type in a network scenario.

**Step 203:** Optimize, based on the first service type, the service running in the first virtual environment.

After identifying the type of the service running in the first virtual environment, the server optimizes, based on the first service type, the service running in the first virtual environment.

Service optimization includes software optimization and/or hardware optimization.

When the service optimization includes the hardware optimization, an implementation in which the server performs, based on the first service type, hardware optimization on the service running in the first virtual environment includes: generating, based on the specification of the first virtual environment, the first service type, and a first mapping relationship, an adjustment policy for a mapping relationship between a hardware resource of the physical machine and a virtual resource of the first virtual environment. The first mapping relationship represents a performance parameter of the physical machine in each of a plurality of combinations, the plurality of combinations are a plurality of combinations of the plurality of service types and a plurality of resource mapping relationships, the resource mapping relationship is a mapping relationship between the hardware resource of the physical machine and a virtual resource of a virtual environment that can run on the physical machine. The first mapping relationship may be referred to as a mapping relationship of a service and a resource from same parameter space to performance parameter space.

The server adjusts, according to the foregoing adjustment policy, the mapping relationship between the hardware resource of the physical machine and the virtual resource of the first virtual environment, to implement the hardware optimization of the service running in the first virtual environment. The server may dynamically adjust the mapping relationship between the hardware resource of the physical machine and the virtual resource of the first virtual environment in a hardware resource hot swapping manner.

In this embodiment of this application, the hardware resource of the physical machine includes one or more of a processor (that is, a pCPU), a memory (that is, a pMemory), and a storage (pStorage). Correspondingly, the virtual resource of the virtual environment includes one or more of a processor (that is, a vCPU), a memory (that is, a vMemory), and a storage (vStorage). 'p' indicates physical (physical), and 'v' indicates virtual (virtual).

When the service optimization includes the software optimization, an implementation in which the server performs, based on the first service type, software optimization on the service running in the first virtual environment includes: determining, from service accelerators respectively corresponding to the plurality of service types, a first service accelerator corresponding to the first service type, and generating a start policy of the first service accelerator.

The server directly starts the first service accelerator in the first virtual environment. Alternatively, the server sends service acceleration prompt information to a user end in the first virtual environment, to indicate the user in the first virtual environment to choose to start the first service accelerator. The user end may choose to start the first service accelerator, or may choose not to start the first service accelerator based on the service acceleration prompt information.

In this embodiment of this application, the service accelerator may include a service acceleration package or another type of accelerator. The service acceleration package includes various types of software acceleration logic code. For example, the service acceleration package includes at least one acceleration operator.

It can be learned from the foregoing descriptions that, the server may generate, based on the first service type, an optimization policy for the service running in the first virtual environment, where the optimization policy includes a hardware optimization policy and/or a software optimization policy. The hardware optimization policy includes the adjustment policy for the mapping relationship between the hardware resource of the physical machine and the virtual resource of the first virtual environment, and the software optimization policy includes the start policy of the first service accelerator. The server optimizes, according to the optimization policy, the service running in the first virtual environment.

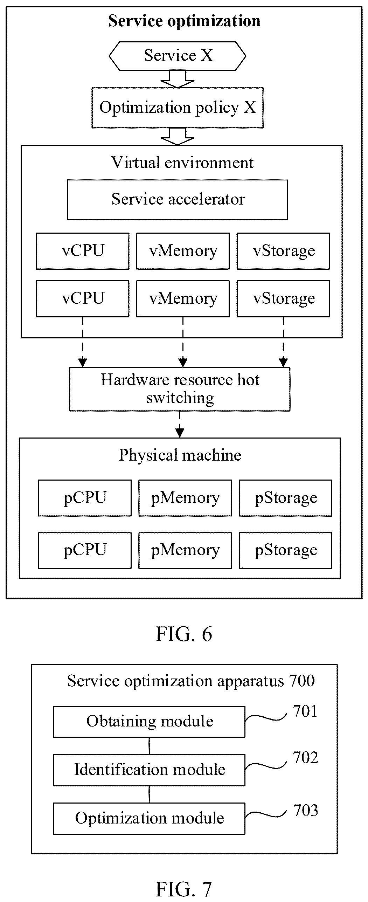

A service optimization process in this embodiment of this application is described by using an example with reference to FIG. 6. Refer to FIG. 6. After identifying a type of a service running in a virtual environment and generating a corresponding optimization policy, the server starts the optimization policy, including starting a service accelerator corresponding to the service type, and dynamically adjusting the mapping relationship between the hardware resource of the physical machine and the virtual resource of the virtual environment in the hardware resource hot swapping manner.

It can be learned from the foregoing descriptions that, during specific implementation, this solution provides an elastic virtualization architecture based on non-contact load sensing. The architecture mainly includes the following seven modules, and the seven modules are respectively:
a data collection module, configured to collect host data (that is, the performance data of the physical machine) without contacting the virtual environment (for example, the virtual machine) on a host side (that is, the physical machine), including collecting a system architecture feature, an OS feature, and a virtualization feature, and specifically including but not limited to CPU performance monitor data, system data, and hypervisor data;
a data preprocessing module, configured to preprocess the data collected by the data collection module, including but not limited to dataset merging, missing value handling, and standardization processing, and perform dimension reduction processing on a full feature sample (that is, the multi-dimensional performance data) according to a principal component analysis method;
a data feature extraction module, configured to extract a feature of preprocessed performance data, to obtain a dimension reduction feature sample.
a specification model generation module, configured to generate a feature sample (that is, the second sample data) of a newly added specification through Kriging interpolation based on a feature sample (that is, the first sample data) of an existing specification in the model library, generate a submodel (that is, the first submodel) of the new specification, and store the submodel in the model library;
a service type identification module, configured to select a submodel of a corresponding specification in the model library based on a specification of a virtual environment, to identify a type of a service running in the virtual environment;
an optimization policy generation module, configured to establish the mapping relationship of the service and the resource from the same parameter space to the performance parameter space; generate a hardware optimization policy for a corresponding service based on the mapping relationship, where the hardware optimization policy includes the mapping relationship between the hardware resource of the physical machine and the virtual resource of the virtual environment; and generate, based on an identified service type, a software optimization policy of a corresponding service, where the software optimization policy includes a start policy of a corresponding service accelerator; and
a resource scheduling optimization module, configured to start the corresponding service accelerator, and dynamically optimize the mapping relationship between the hardware resource of the physical machine and the virtual resource of the virtual environment.

In this embodiment of this application, performance of this solution is further verified in a plurality of virtualization scenarios. Specifically, in this solution, service optimization performance is improved by 20% on average in virtualization scenarios such as big data, a database, and a network.

It can be learned from the foregoing descriptions that, in this solution, a service type can be identified and a hardware resource can be scheduled for a virtual environment on a physical host side, to implement service optimization. During actual application, an elastic architecture applied to the virtual environment in this solution may be extended to a real machine (that is, the physical machine), a same type of elastic architecture between real machines is established, and the architecture is established and run on a host (that is, the real machine). The host and a plurality of slave machines (physical devices) of the host are networked, to implement service type sensing in the slave machine. A difference lies in that scheduling of the hardware resource is changed to scheduling of a workload. The host may allocate services to each slave machine based on a service type identification result and performance of each slave machine, to implement elastic allocation of service load in a physical device cluster.

In conclusion, in this embodiment of this application, the performance data of the physical machine is obtained, where the performance data includes performance data of at least one dimension of any virtual environment running on the physical machine; the type of the service running in the virtual environment can be identified based on the obtained performance data and the type of the virtual environment by using the identification model; and the corresponding service is optimized based on the identified service type. In this solution, service identification accuracy is improved by using the identification model, so that a corresponding service can be optimized more properly and effectively, thereby improving service performance.

FIG. 7 is a diagram of a structure of a service optimization apparatus 700 according to an embodiment of this application. The service optimization apparatus 700 may be implemented as a part or all of a computer device by using software, hardware, or a combination thereof. The computer device may be the server in the foregoing method embodiment. Refer to FIG. 7. The apparatus 700 includes an obtaining module 701, an identification module 702, and an optimization module 703.

The obtaining module 701 is configured to obtain first performance data of a physical machine, where at least one virtual environment runs on the physical machine, the first performance data includes performance data of at least one dimension of a first virtual environment, and the first virtual environment is any one of the at least one virtual environment.

The identification module 702 is configured to determine a first service type based on the first performance data and a specification of the first virtual environment by using an identification model, where the first service type is a type of a service running in the first virtual environment, the identification model represents a correspondence between performance of the physical machine and a plurality of service types in a plurality of virtual environment specifications, the plurality of service types include the first service type, and the plurality of virtual environment specifications include the specification of the first virtual environment.

The optimization module 703 is configured to optimize, based on the first service type, the service running in the first virtual environment.

Optionally, the at least one virtual environment includes one or more of a virtual machine, a container, and a function.

Optionally, the identification model includes a plurality of submodels that are in one-to-one correspondence with the plurality of virtual environment specifications, and each of the plurality of submodels is used to identify a type of a service running in a virtual environment of a corresponding specification.

Optionally, the apparatus 700 further includes:
a determining module, configured to determine the identification model based on the specification of the first virtual environment and a model library.

Optionally, the determining module includes:
a first determining submodule, configured to: if the model library includes a first submodel corresponding to the specification of the first virtual environment, determine the model library as the identification model.

Optionally, the determining module includes:
a first generation submodule, configured to: if the model library does not include the first submodel corresponding to the specification of the first virtual environment, generate the first submodel based on the specification of the first virtual environment and the model library; and
an adding submodule, configured to add the first submodel to the model library, to obtain the identification model.

Optionally, the generation submodule is configured to:
perform interpolation processing on first sample data in the model library based on the specification of the first virtual environment, to obtain second sample data, where the first sample data is used to obtain an existing submodel in the model library through training; and
train an initial model by using the second sample data, to obtain the first submodel.

Optionally, the obtaining module 701 includes:
a collection submodule, configured to collect multi-dimensional performance data of the physical machine; and
a dimension reduction submodule, configured to perform dimension reduction processing on the multi-dimensional performance data, to obtain the first performance data.

Optionally, the identification module 702 includes:
an input submodule, configured to input the first performance data into the first submodel that is in the plurality of submodels included in the identification model and that corresponds to the specification of the first virtual environment, to obtain a plurality of probabilities output by the first submodel, where the plurality of probabilities are in one-to-one correspondence with the plurality of service types; and
a second determining submodule, configured to determine the first service type from the plurality of service types based on the plurality of probabilities.

Optionally, the second determining submodule is configured to:
if a difference between a largest value and a second largest value in the plurality of probabilities is less than a probability difference threshold, determine a candidate probability set from the plurality of probabilities based on the probability difference threshold, where the candidate probability set includes first N probabilities that are sorted in descending order of values in the plurality of probabilities, a difference between every two adjacent probabilities in the N probabilities is less than the probability abnormality threshold, and N is an integer greater than 1; and
determine, based on key performance data in the first performance parameter, the first service type from N service types corresponding to the N probabilities.

Optionally, the optimization includes software optimization and/or hardware optimization.

Optionally, when the optimization includes the hardware optimization, the optimization module 703 includes:
a second generation submodule, configured to generate, based on the specification of the first virtual environment, the first service type, and a first mapping relationship, an adjustment policy for a mapping relationship between a hardware resource of the physical machine and a virtual resource of the first virtual environment, where the first mapping relationship represents a performance parameter of the physical machine in each of a plurality of combinations, the plurality of combinations are a plurality of combinations of the plurality of service types and a plurality of resource mapping relationships, the resource mapping relationship is a mapping relationship between the hardware resource of the physical machine and a virtual resource of a virtual environment that can run on the physical machine.

Optionally, the first performance data includes one or more of processor performance monitor data, operating system data, and virtual environment performance monitor data.

In this embodiment of this application, the performance data of the physical machine is obtained, where the performance data includes performance data of at least one dimension of any virtual environment running on the physical machine; the type of the service running in the virtual environment can be identified based on the obtained performance data and the type of the virtual environment by using the identification model; and the corresponding service is optimized based on the identified service type. In this solution, service identification accuracy is improved by using the identification model, so that a corresponding service can be optimized more properly and effectively, thereby improving service performance.

It should be noted that, when the service optimization apparatus provided by the foregoing embodiment optimizes a service, division of the foregoing functional modules is merely used as an example for description. During actual application, the foregoing functions may be allocated to different functional modules for implementation as required, that is, an internal structure of the apparatus is divided into different functional modules, to implement all or a part of the functions described above. In addition, the service optimization apparatus in the foregoing embodiment and the service optimization method in the foregoing embodiment belong to a same concept. For a specific implementation process, refer to the method embodiment. Details are not described herein again.

All or a part of the foregoing embodiments may be implemented by software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like. It should be noted that the computer-readable storage medium mentioned in embodiments of this application may be a nonvolatile storage medium, in other words, may be a non-transitory storage medium.

It should be understood that "at least one" mentioned in this specification refers to one or more, and "a plurality of" refers to two or more. In descriptions of embodiments of this application, unless otherwise specified, "/" indicates "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions. For example, the performance data in embodiments of this application is obtained under full authorization.

The foregoing descriptions are merely embodiments of this application, but are not intended to limit this application. Any modification, equivalent replacement, or improvement made without departing from the subject and principle of this application should fall within the protection scope of this application.

## Claims

1. A service optimization method, wherein the method comprises:
obtaining first performance data of a physical machine, wherein at least one virtual environment runs on the physical machine, the first performance data comprises performance data of at least one dimension of a first virtual environment, and the first virtual environment is any one of the at least one virtual environment;
determining a first service type based on the first performance data and a specification of the first virtual environment by using an identification model, wherein the first service type is a type of a service running in the first virtual environment, the identification model represents a correspondence between performance of the physical machine and a plurality of service types in a plurality of virtual environment specifications, the plurality of service types comprise the first service type, and the plurality of virtual environment specifications comprise the specification of the first virtual environment; and
optimizing, based on the first service type, the service running in the first virtual environment.

2. The method according to claim 1, wherein the at least one virtual environment comprises one or more of a virtual machine, a container, and a function.

3. The method according to claim 1 or 2, wherein the identification model comprises a plurality of submodels that are in one-to-one correspondence with the plurality of virtual environment specifications, and each of the plurality of submodels is used to identify a type of a service running in a virtual environment of a corresponding specification.

4. The method according to any one of claims 1 to 3, wherein the method further comprises:
determining the identification model based on the specification of the first virtual environment and a model library.

5. The method according to claim 4, wherein the determining the identification model based on the specification of the first virtual environment and the model library comprises:
if the model library comprises a first submodel corresponding to the specification of the first virtual environment, determining the model library as the identification model.

6. The method according to claim 4 or 5, wherein the determining the identification model based on the specification of the first virtual environment and the model library comprises:
if the model library does not comprise the first submodel corresponding to the specification of the first virtual environment, generating the first submodel based on the specification of the first virtual environment and the model library; and
adding the first submodel to the model library, to obtain the identification model.

7. The method according to claim 6, wherein the generating the first submodel based on the specification of the first virtual environment and the model library comprises:
performing interpolation processing on first sample data in the model library based on the specification of the first virtual environment, to obtain second sample data, wherein the first sample data is used to obtain an existing submodel in the model library through training; and
training an initial model by using the second sample data, to obtain the first submodel.

8. The method according to any one of claims 1 to 7, wherein the obtaining the first performance data of the physical machine comprises:
collecting multi-dimensional performance data of the physical machine; and
performing dimension reduction processing on the multi-dimensional performance data, to obtain the first performance data.

9. The method according to any one of claims 1 to 8, wherein the determining the first service type based on the first performance data and the specification of the first virtual environment by using the identification model comprises:
inputting the first performance data into the first submodel that is in the plurality of submodels comprised in the identification model and that corresponds to the specification of the first virtual environment, to obtain a plurality of probabilities output by the first submodel, wherein the plurality of probabilities are in one-to-one correspondence with the plurality of service types; and
determining the first service type from the plurality of service types based on the plurality of probabilities.

10. The method according to claim 9, wherein the determining the first service type from the plurality of service types based on the plurality of probabilities comprises:
if a difference between a largest value and a second largest value in the plurality of probabilities is less than a probability difference threshold, determining a candidate probability set from the plurality of probabilities based on the probability difference threshold, wherein the candidate probability set comprises first N probabilities that are sorted in descending order of values in the plurality of probabilities, a difference between every two adjacent probabilities in the N probabilities is less than the probability abnormality threshold, and N is an integer greater than 1; and
determining, based on key performance data in the first performance parameter, the first service type from N service types corresponding to the N probabilities.

11. The method according to any one of claims 1 to 10, wherein the optimization comprises software optimization and/or hardware optimization.

12. The method according to claim 11, wherein when the optimization comprises the hardware optimization, the optimizing, based on the first service type, the service running in the first virtual environment comprises:
generating, based on the specification of the first virtual environment, the first service type, and a first mapping relationship, an adjustment policy for a mapping relationship between a hardware resource of the physical machine and a virtual resource of the first virtual environment, wherein the first mapping relationship represents a performance parameter of the physical machine in each of a plurality of combinations, the plurality of combinations are a plurality of combinations of the plurality of service types and a plurality of resource mapping relationships, the resource mapping relationship is a mapping relationship between the hardware resource of the physical machine and a virtual resource of a virtual environment that can run on the physical machine.

13. The method according to any one of claims 1 to 12, wherein the first performance data comprises one or more of processor performance monitor data, operating system data, and virtual environment performance monitor data.

14. A service optimization apparatus, wherein the apparatus comprises:
an obtaining module, configured to obtain first performance data of a physical machine, wherein at least one virtual environment runs on the physical machine, the first performance data comprises performance data of at least one dimension of a first virtual environment, and the first virtual environment is any one of the at least one virtual environment;
an identification module, configured to determine a first service type based on the first performance data and a specification of the first virtual environment by using an identification model, wherein the first service type is a type of a service running in the first virtual environment, the identification model represents a correspondence between performance of the physical machine and a plurality of service types in a plurality of virtual environment specifications, the plurality of service types comprise the first service type, and the plurality of virtual environment specifications comprise the specification of the first virtual environment; and
an optimization module, configured to optimize, based on the first service type, the service running in the first virtual environment.

15. The apparatus according to claim 14, wherein the at least one virtual environment comprises one or more of a virtual machine, a container, and a function.

16. The apparatus according to claim 14 or 15, wherein the identification model comprises a plurality of submodels that are in one-to-one correspondence with the plurality of virtual environment specifications, and each of the plurality of submodels is used to identify a type of a service running in a virtual environment of a corresponding specification.

17. The apparatus according to any one of claims 14 to 16, wherein the apparatus further comprises:
a determining module, configured to determine the identification model based on the specification of the first virtual environment and a model library.

18. The apparatus according to claim 17, wherein the determining module comprises:
a first determining submodule, configured to: if the model library comprises a first submodel corresponding to the specification of the first virtual environment, determine the model library as the identification model.

19. The apparatus according to claim 17 or 18, wherein the determining module comprises:
a first generation submodule, configured to: if the model library does not comprise the first submodel corresponding to the specification of the first virtual environment, generate the first submodel based on the specification of the first virtual environment and the model library; and
an adding submodule, configured to add the first submodel to the model library, to obtain the identification model.

20. The apparatus according to claim 19, wherein the generation submodule is configured to:
perform interpolation processing on first sample data in the model library based on the specification of the first virtual environment, to obtain second sample data, wherein the first sample data is used to obtain an existing submodel in the model library through training; and
train an initial model by using the second sample data, to obtain the first submodel.

21. The apparatus according to any one of claims 14 to 20, wherein the obtaining module comprises:
a collection submodule, configured to collect multi-dimensional performance data of the physical machine; and
a dimension reduction submodule, configured to perform dimension reduction processing on the multi-dimensional performance data, to obtain the first performance data.

22. The apparatus according to any one of claims 14 to 21, wherein the identification module comprises:
an input submodule, configured to input the first performance data into the first submodel that is in the plurality of submodels comprised in the identification model and that corresponds to the specification of the first virtual environment, to obtain a plurality of probabilities output by the first submodel, wherein the plurality of probabilities are in one-to-one correspondence with the plurality of service types; and
a second determining submodule, configured to determine the first service type from the plurality of service types based on the plurality of probabilities.

23. The apparatus according to claim 22, wherein the second determining submodule is configured to:
if a difference between a largest value and a second largest value in the plurality of probabilities is less than a probability difference threshold, determine a candidate probability set from the plurality of probabilities based on the probability difference threshold, wherein the candidate probability set comprises first N probabilities that are sorted in descending order of values in the plurality of probabilities, a difference between every two adjacent probabilities in the N probabilities is less than the probability abnormality threshold, and N is an integer greater than 1; and
determine, based on key performance data in the first performance parameter, the first service type from N service types corresponding to the N probabilities.

24. The apparatus according to any one of claims 14 to 23, wherein the optimization comprises software optimization and/or hardware optimization.

25. The apparatus according to claim 24, wherein when the optimization comprises the hardware optimization, the optimization module comprises:
a second generation submodule, configured to generate, based on the specification of the first virtual environment, the first service type, and a first mapping relationship, an adjustment policy for a mapping relationship between a hardware resource of the physical machine and a virtual resource of the first virtual environment, wherein the first mapping relationship represents a performance parameter of the physical machine in each of a plurality of combinations, the plurality of combinations are a plurality of combinations of the plurality of service types and a plurality of resource mapping relationships, the resource mapping relationship is a mapping relationship between the hardware resource of the physical machine and a virtual resource of a virtual environment that can run on the physical machine.

26. The apparatus according to any one of claims 14 to 25, wherein the first performance data comprises one or more of processor performance monitor data, operating system data, and virtual environment performance monitor data.

27. A server, wherein the server comprises a processor and a storage;
the storage is configured to store a computer program; and
the processor is configured to execute the computer program, to implement the method according to any one of claims 1 to 13.

28. A computer-readable storage medium, wherein the storage medium stores a computer program, and when the computer program is executed by a processor, steps in the method according to any one of claims 1 to 13 are implemented.

29. A computer program product, wherein the computer program product stores computer instructions, and when the computer instructions are executed by a processor, steps in the method according to any one of claims 1 to 13 are implemented.
